# EUROPÄISCHE PATENTSCHRIFT

(11) **EP 4 108 063 B1**
(45) Veröffentlichungstag und Bekanntmachung des Hinweises auf die Patenterteilung: **01.10.2025**
(21) Anmeldenummer: 22156918.9
(22) Anmeldetag: 16.02.2022
(51) Int. Cl.: A01D 41/127, A01D 43/08, G01N 15/02

(54) **VERFAHREN ZUR BESTIMMUNG EINES INDIKATORS FÜR EINE AUFBEREITUNGSQUALITÄT EINES LANDWIRTSCHAFTLICHEN ERNTEGUTS**
METHOD FOR DETERMINING AN INDICATOR FOR A TREATMENT QUALITY OF AN AGRICULTURAL CROP
PROCÉDÉ DE DÉTERMINATION D'UN INDICATEUR POUR UNE QUALITÉ DE TRAITEMENT D'UNE PRODUIT DE RÉCOLTE AGRICOLE

(30) Priorität: 22.06.2021 DE 102021116118
(43) Veröffentlichungstag der Anmeldung: 28.12.2022
(73) Patentinhaber: CLAAS Selbstfahrende Erntemaschinen GmbH, 33428 Harsewinkel (DE)
(72) Erfinder: Belau, Sven Carsten, 33332 Gütersloh (DE); Fischer, Frédéric, 59759 Arnsberg (DE); Heitmann, Christoph, 48231 Warendorf (DE); Bönig, Ingo, 33330 Gütersloh (DE)
(74) Vertreter: CLAAS Gruppe

(56) Entgegenhaltungen:
- EP-A1- 2 098 109
- EP-A1- 3 646 703
- DE-A1- 102019 214 038
- US-A1- 2016 029 561
- US-A1- 2020 281 119

## Beschreibung

Die Erfindung betrifft ein Verfahren zur Bestimmung eines Indikators für eine Aufbereitungsqualität eines landwirtschaftlichen Ernteguts und zur Steuerung eines Feldhäckslers gemäß dem Oberbegriff von Anspruch 1.

Feldhäcksler ernten einen Feldbestand von einem Feld ab und verarbeiten das so gewonnene Erntegut mittels einer Reihe von Arbeitsaggregaten. Ein primäres und vorliegend besonders interessantes Einsatzgebiet von Feldhäckslern ist die Ernte von Mais. Bei dieser Ernte wird häufig mittels des Feldhäckslers die gesamte Maispflanze inklusive der Maiskolben aufgenommen und gehäckselt. Das so gewonnene Erntegut wird insbesondere zur Fütterung von Nutztieren, vor allem Wiederkäuern, verwendet. Eine alternative Verwendungsmöglichkeit ist die Nutzung in Biogasanlagen.

Besonders bei der Verwendung des Ernteguts als Futtermittel für Tiere und bei der Verwendung in Biogasanlagen ist wichtig, dass die Kornbestandteile des Ernteguts aufgeschlossen, also zerkleinert, werden. Wichtig ist das Aufschließen der Kornbestandteile, damit die darin enthaltene Stärke zugänglich wird und nicht durch die Hülle des Kornbestandteils geschützt wird. Das Aufschließen der Kornbestandteile geschieht einerseits durch das Häckseln des Ernteguts und andererseits wesentlich durch einen Corncracker des Feldhäckslers. Dieser Corncracker kann zwar so eingestellt werden, dass mit Sicherheit alle Kornbestandteile stark zerkleinert sind, eine derartige Einstellung verbraucht jedoch unnötig viel Kraftstoff.

Unter dem Begriff Silage Snap App ist ein Verfahren bekannt, bei dem ein Indikator für eine Aufbereitungsqualität eines Kornbestandteils, speziell von Maiskörnern, eines landwirtschaftlichen Ernteguts mittels eines Mobilgeräts, wie eines Smartphones bestimmt wird. Bei dem bekannten Verfahren müssen die Maiskörner aus dem Erntegut ausgewaschen, manuell voneinander getrennt und auf einen bekannten Hintergrund verteilt werden. Anschließend wird mittels des Mobilgeräts ein Foto aufgenommen und anhand dieses Fotos wird eine Approximation des Corn-Silage-Processing-Scores (CSPS) bestimmt.

Trotz der aufwendigen manuellen Sortierung, führt die Regression des bestimmten Indikators für die Aufbereitungsqualität zu Ergebnissen, die noch Raum für eine Optimierung lassen.

Aus der EP 2 982 223 B1 und der EP 3 646 703 A1 sind Verfahren zur Analyse von Erntegut bekannt, die mittels einer dedizierten, auf einem Feldhäcksler angebrachten Kamera durchgeführt werden. Derartige Kameras sind teuer und die Verfahren aufwändig. Aus der US 4 975 863 A ist allgemein ein Verfahren zur Bildanalyse von Partikeln bekannt, in dem die Partikel aufwändig separiert werden. Schließlich ist aus der EP 261 920 A1 ein allgemeines Verfahren zur Analyse von Erntegut bekannt.

Es besteht daher ein Bedarf nach einem kostengünstigen, weniger aufwändigen und/oder genaueren Verfahren zur Bestimmung eines Indikators für eine Aufbereitungsqualität eines landwirtschaftlichen Ernteguts.

Der Erfindung liegt das Problem zugrunde, das bekannte Verfahren derart auszugestalten und weiterzubilden, dass die Ermittlung des Indikators für die Aufbereitungsqualität eines landwirtschaftlichen Ernteguts vereinfacht und/oder verbessert wird.

Das obige Problem wird bei einem Verfahren gemäß dem Oberbegriff von Anspruch 1 durch die Merkmale des kennzeichnenden Teils von Anspruch 1 gelöst.

Wesentlich ist die grundsätzliche Überlegung, dass eine vorbereitete Probe, die Kornbestandteile und Nicht-Kornbestandteile umfasst, mittels eines trainierten Maschinenlernmodells analysiert werden kann. Dafür werden ein Mobilgerät mit einer Mobilgerät-Recheneinheit und ein Feldhäcksler mit einer Feldhäcksler-Recheneinheit verwendet.

Im Einzelnen wird vorgeschlagen, dass die Recheneinheit Bilddaten einer vorbereiteten, Kornbestandteile und Nicht-Kornbestandteile umfassenden, Probe des Ernteguts in einer Analyseroutine analysiert, um den Indikator für die Aufbereitungsqualität des Ernteguts zu bestimmen, dass die Recheneinheit in der Analyseroutine ein trainiertes Maschinenlernmodell anwendet, um zumindest einen Schritt der Bestimmung des Indikators für die Aufbereitungsqualität des Ernteguts durchzuführen und dass die Recheneinheit mindestens einen Maschinenparameter des Feldhäckslers basierend auf dem Indikator für die Aufbereitungsqualität einstellt.

Durch den Entfall des aufwendigen manuellen Aussortierens der Kornbestandteile aus der Probe, wird das vorschlagsgemäße Verfahren deutlich einfacher. Hinzu kommt, dass die Möglichkeit gegeben ist, auch die Nicht-Kornbestandteile zu analysieren. Weiterhin hat sich gezeigt, dass durch die Nutzung eines trainierten Maschinenlernmodells ein höheres Bestimmtheitsmaß bei der Regression auf den im Labor ermittelten CSPS erreichbar ist. Zwar wäre grundsätzlich zu erwarten, dass eine manuelle Separierung der Kornbestandteile wie bei dem bekannten Stand der Technik der Silage Snap App zu einer größtmöglichen Genauigkeit führt, allerdings hat sich dies nicht bestätigt.

Bei den besonders bevorzugten Ausgestaltungen gemäß Anspruch 2 sind die Kornbestandteile Mais und/oder ist der Indikator für die Aufbereitungsqualität ein Indikator für die Aufbereitungsqualität der Kornbestandteile. Gerade beim Maishäckseln ist die Aufbereitungsqualität der Kornbestandteile von wesentlicher Bedeutung.

Gemäß Anspruch 3 führt die Recheneinheit in der Analyseroutine vorzugsweise einen Klassifikationsschritt auf den Bilddaten durch, insbesondere unter Verwendung des trainierten Maschinenlernmodells. So werden diejenigen Bildregionen ermittelt, die den Kornbestandteilen zugeordnet sind. Auf diesen Bildregionen kann dann im Weiteren Analytik vorgenommen werden.

Bevorzugt basiert der Klassifikationsschritt auf einer semantischen Segmentierung (Anspruch 4). Die Nutzung einer semantischen Segmentierung in dem Klassifikationsschritt trägt dem Umstand Rechnung, dass Kornbestandteile im Mittel wenig dicht über eine Probe des Ernteguts verteilt sind, sodass selten mehrere Kornbestandteile überlappen. Weiterhin ist die Erkennung der Kornbestandteile wenig kontextabhängig, wodurch ein kleines und effizientes Maschinenlernmodell verwendet werden kann.

Anspruch 5 trägt dem Umstand Rechnung, dass die Komplexität des vorschlagsgemäßen Verfahrens in der Segmentierung bzw. Klassifikation liegt. Die anschließende Analyse erschöpft sich vorzugsweise in einer Betrachtung der geometrischen Größen der ermittelten Bildregionen. Dabei kann insbesondere auf eine kleinste Hauptachse eines minimalen umgebenden Rechtecks abgestellt werden, da diese auch bei dem Siebverfahren der CSPS-Bestimmung dafür verantwortlich ist, ob ein Kornbestandteil durch das Sieb fällt. Insbesondere bei dem Versuch, nah an die Laborbestimmung des CSPS zu gelangen, ist diese Analyse daher vorteilhaft.

Aufgrund des bevorzugt niedrig komplexen Analyseschritts kann gemäß Anspruch 6 vorgesehen sein, dass dieser nicht auf einem Maschinenlernverfahren basiert.

Anspruch 7 gibt eine bevorzugte Bestimmung des Indikators der Aufbereitungsqualität in Analogie zum CSPS an.

Anspruch 8 betrifft eine bevorzugte Architektur des Maschinenlernmodells. Besonders ein fully convolutional network liefert, insbesondere für die semantische Segmentierung, gute Ergebnisse.

Anspruch 9 betrifft bevorzugte Ausgestaltungen eines Vorverarbeitungsschritts. Durch eine gute Vorverarbeitung der Bilddaten können sowohl ein einfacheres Maschinenlernmodell verwendet werden als auch bessere Ergebnisse erzielt werden. Insbesondere eine Korrektur einer Perspektive eines Bildes ist bei der Betrachtung geometrischer Größen vorteilhaft. Das Teilen eines Bildes in mindestens zwei, vorzugsweise mindestens vier, Subbilder ermöglicht die Anwendung eines weniger komplexen Maschinenlernmodells auf die so erhaltenen kleineren Subbilder. Da bei der vorliegenden Aufgabe wenig bis keine Informationen in einem globalen Kontext vorhanden sind, lässt sich so einfach und ohne Qualitätsverlust eine erhöhte Effizienz erzielen.

Je nachdem ob die Analyseroutine auf einem Server oder dem Mobilgerät durchgeführt wird, lassen sich entweder komplexere Operationen durchführen oder eine Offline-Fähigkeit erreichen (Anspruch 10).

In einem einzelnen Bild einer Probe eines Ernteguts sind bei hinreichender Auflösung relativ wenige Kornbestandteile vorhanden. Aufgrund einer hohen Homogenität des Ernteguts hinsichtlich des Kornaufschlusses ist es jedoch unproblematisch, mehrere Bilder unterschiedlicher Proben eines homogenen, zu vermessenden Ernteguts in den Bilddaten zu kombinieren. Durch die Analyse mehrerer Bilder lässt sich statistisch betrachtet eine höhere Genauigkeit erzielen. Dabei haben sich Bilddaten als vorteilhaft erwiesen, in denen mindestens 100 bis 200 Kornpartikel vorhanden sind. Die entsprechenden Überlegungen sind Gegenstand von Anspruch 11.

Bei einer Ausgestaltung gemäß Anspruch 12 ist die vorbereitete Probe eine Probe auf einem definierten Hintergrund, der vorzugsweise eine Größenreferenz und/oder eine definierte Farbe aufweist. Mittels der Größenreferenz lassen sich auf einfache Art und Weise die geometrischen Abmessungen in Form des Größenwerts ermitteln. Die definierte Farbe ermöglicht eine einfache Trennung von Vordergrund und Hintergrund in den Bilddaten.

Anspruch 13 gibt bevorzugt vorhandene Arbeitsaggregate des Feldhäckslers an. Diese können mit Maschinenparametern einstellbar sein.

Der Indikator für die Aufbereitungsqualität kann einem Benutzer angezeigt werden. Es kann vorgesehen sein, dass der Benutzer einen zu erreichenden Wert für den Indikator für die Aufbereitungsqualität vorgeben kann. Diese Ausgestaltungen sind Gegenstand von Anspruch 14. Somit wird es dem Benutzer ermöglicht, seine Zielvorgaben an den Feldhäcksler zu übergeben und, bei einer Ausgestaltung gemäß Anspruch 15, den Feldhäcksler die Optimierung der Aufbereitungsqualität übernehmen zu lassen. Anspruch 16 gibt dabei bevorzugte Optimierungsziele an.

Anspruch 17 betrifft bevorzugte Ausgestaltungen der Optimierung der Aufbereitungsqualität.

Im Folgenden wird die Erfindung anhand einer lediglich Ausführungsbeispiele darstellenden Zeichnung näher erläutert. In der Zeichnung zeigt:
- Fig. 1: einen Feldhäcksler und ein Mobilgerät in einer Anwendungssituation des vorschlagsgemäßen Verfahrens,
- Fig. 2: schematisch den Ablauf des vorschlagsgemäßen Verfahrens, und
- Fig. 3: schematisch die vorschlagsgemäße Analyseroutine.

Das vorschlagsgemäße Verfahren zur Bestimmung eines Indikators I für eine Aufbereitungsqualität eines landwirtschaftlichen Ernteguts 1 und zur Steuerung eines Feldhäckslers 2 wird anhand der Figuren näher erläutert. Bei dem Erntegut 1 kann es sich dann um gehäckselte Pflanzen handeln, insbesondere um gehäckselte Maispflanzen.

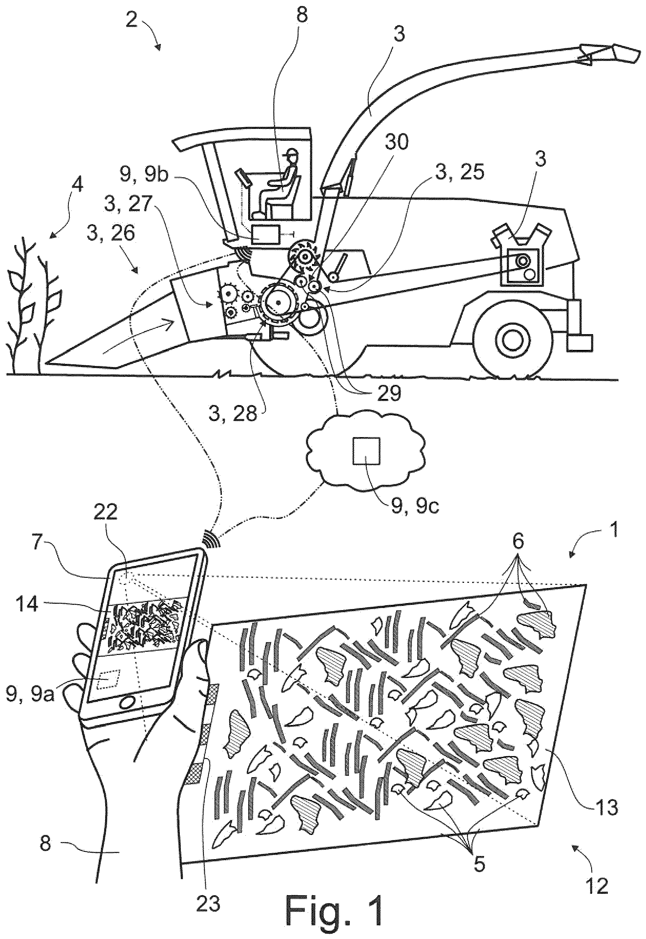

Der in Fig. 1 dargestellte Feldhäcksler 2 weist mindestens ein Arbeitsaggregat 3 zum Abernten eines Feldbestandes 4 und/oder zur Verarbeitung von Erntegut 1 des Feldbestandes 4 auf. Hier und vorzugsweise handelt es sich bei dem Feldbestand 4 um Maispflanzen.

Grundsätzlich kann vorgesehen sein, dass der Feldhäcksler 2 den Feldbestand 4 aberntet. Alternativ kann der Feldhäcksler 2 jedoch auch bereits abgeernteten Feldbestand 4 lediglich aufnehmen. Das so gewonnene Erntegut 1 wird sodann von dem Feldhäcksler 2 verarbeitet, insbesondere gehäckselt. Naturgemäß umfasst das Erntegut 1 Kornbestandteile 5 und Nicht-Kornbestandteile 6. Bei den Kornbestandteilen 5 kann es sich um Maiskörner der Maispflanzen handeln. Die Nicht-Kornbestandteile 6 können dann Blätter, Stängel und dergleichen der Maispflanze sein.

Im Einzelnen betrifft die vorschlagsgemäße Lehre ein Verfahren zur Bestimmung eines Indikators I für eine Aufbereitungsqualität eines landwirtschaftlichen Ernteguts 1 mittels eines Mobilgeräts 7 und zur Steuerung eines Feldhäckslers 2.

Das Mobilgerät 7 kann beispielsweise ein Smartphone oder ein Tablet sein. Es zeichnet sich dadurch aus, dass es von einem Benutzer 8 mitgeführt und einfach verwendet werden kann. Vorzugsweise ist das Mobilgerät 7 kein dediziertes Gerät, sondern lässt sich allgemein auch in Lebenssituationen verwenden, die mit einer landwirtschaftlichen Tätigkeit nicht zusammenhängen.

Das Mobilgerät 7 weist hier eine Mobilgerät-Recheneinheit 9a aufweist die Teil einer Recheneinheit 9 ist. Der Feldhäcksler 2 weist eine Feldhäcksler-Recheneinheit 9b auf, die Teil der Recheneinheit 9 ist und die Mobilgerät-Recheneinheit 9a kommuniziert mit der Feldhäcksler-Recheneinheit 9b kommuniziert, Diese Kommunikation kann über einen direkten Kanal wie Bluetooth oder indirekt über das Internet stattfinden.

Wesentlich ist nun, dass die Recheneinheit 9 Bilddaten 10 einer vorbereiteten, Kornbestandteile 5 und Nicht-Kornbestandteile 6 umfassenden, Probe des Ernteguts 1 in einer Analyseroutine 11 analysiert, um den Indikator I für die Aufbereitungsqualität des Ernteguts 1 zu bestimmen.

Die vorbereitete Probe 12 des Ernteguts 1 wird im Folgenden noch näher erläutert. Es handelt sich dabei vorzugsweise um eine dünne, auf einem Brett 13 verteilte Schicht des Ernteguts 1, wie sie mit wenigen Handgriffen vorbereitet werden kann. Es ist somit beispielhaft so, dass der Benutzer 8 während einer Feldbearbeitung den Feldhäcksler 2 kurz anhält, beispielsweise zwei Handvoll Erntegut 1 aus einem Erntegutbehälter entnimmt, diese auf einem mitgeführten Brett 13 verteilt, mittels seines Smartphones ein Bild 14 aufnimmt und dieses von dem Smartphone analysieren lässt. Der gesamte Vorgang kann in wenigen Minuten abgeschlossen werden. Anschließend kann der Benutzer 8 direkt Änderungen am Feldhäcksler 2 vornehmen, sofern gewünscht.

Wesentlich ist weiterhin, dass die Recheneinheit 9 in der Analyseroutine 11 ein trainiertes Maschinenlernmodell 15 anwendet, um zumindest einen Schritt der Bestimmung des Indikators I für die Aufbereitungsqualität des Ernteguts 1 durchzuführen und dass die Recheneinheit 9 mindestens einen Maschinenparameter des Feldhäckslers 2 basierend auf dem Indikator I für die Aufbereitungsqualität einstellt. Bei dem trainierten Maschinenlernmodell 15 kann es sich beispielsweise um ein trainiertes neuronales Netzwerk handeln. Bevorzugte Ausführungsbeispiele werden im Folgenden noch angegeben. Ein wesentlicher Vorteil des vorschlagsgemäßen Verfahrens ist, dass die vorbereitete Probe 12 des Ernteguts 1 nicht in Kornbestandteile 5 und Nicht-Kornbestandteile 6 separiert werden muss.

Hier und vorzugsweise sind die Kornbestandteile 5 Maiskornbestandteile. Zusätzlich oder alternativ kann der Indikator I für die Aufbereitungsqualität ein Indikator I für die Aufbereitungsqualität der Kornbestandteile 5 sein. Vorzugsweise ist der Indikator I für die Aufbereitungsqualität ein Indikator I für den Kornaufschluss, der weiter vorzugsweise mit dem Corn-Silage-Processing-Score korreliert. Das vorschlagsgemäße Verfahren dient also vorzugsweise der Approximation des CSPS.

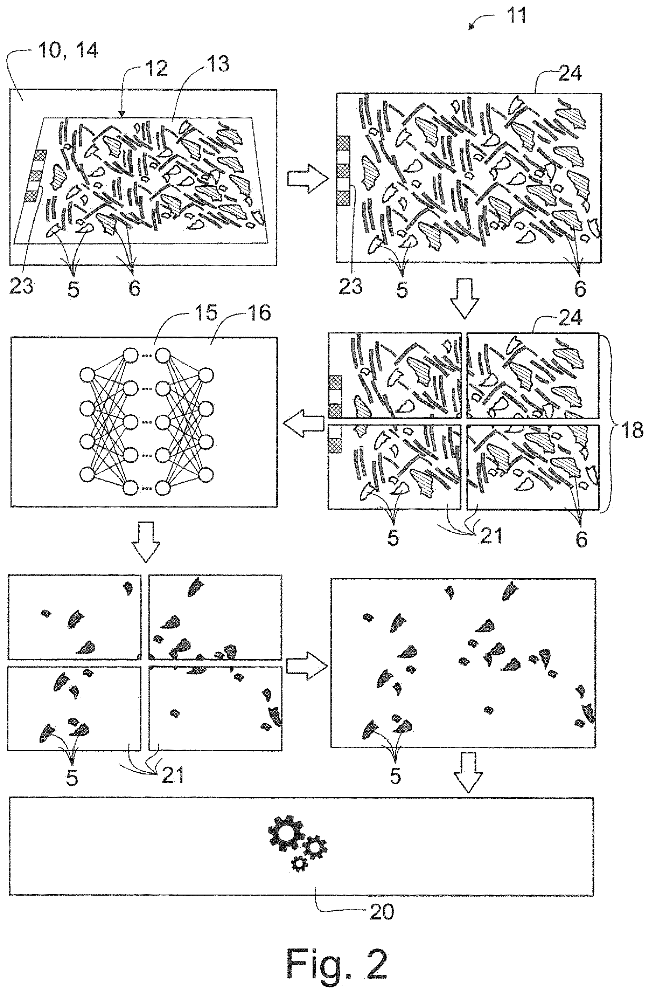

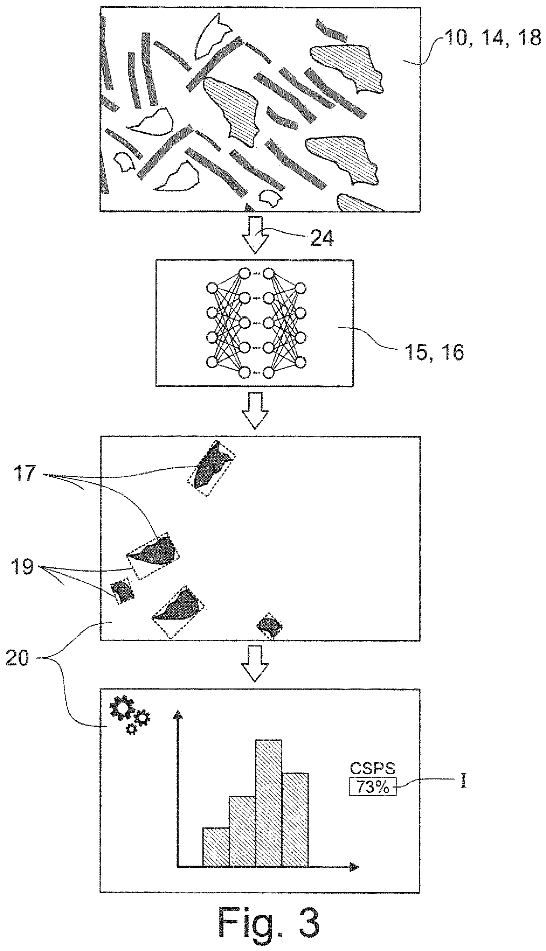

Mit Hinblick auf die Figuren 2 und 3 wird nun die Analyseroutine 11 betrachtet. Es kann vorgesehen sein, dass die Recheneinheit 9 in der Analyseroutine 11 einen Klassifikationsschritt 16 auf den Bilddaten 10 durchführt. In dem Klassifikationsschritt 16 ermittelt die Recheneinheit 9 Kornbestandteilen 5 zugeordneten Bildregionen 17 aus Eingangsdaten 18. Die Eingangsdaten 18 können im einfachsten Fall die Bilddaten 10 selbst sein und basieren generell auf den Bilddaten 10. Sie können in einem noch zu erläuternden Vorverarbeitungsschritt 24 aus den Bilddaten 10 ermittelt werden.

Die Bildregionen 17 können grundsätzlich einzelne Pixel, Pixelgruppen, Rechtecke 19, Polygone usw. sein.

Vorzugsweise wendet die Recheneinheit 9 in dem Klassifikationsschritt 16 das trainierte Maschinenlernmodell 15 an, um aus den Bilddaten 10 die den Kornbestandteilen 5 zugeordneten Bildregionen 17 zu ermitteln. Die Zweiteilung der Analyseroutine 11 in den Klassifikationsschritt 16 und einem noch zu erläuternden Analyseschritt 20 wird in Fig. 3 visualisiert.

Hier und vorzugsweise ist vorgesehen, dass das trainierte Maschinenlernmodell 15 bei seiner Anwendung eine semantische Segmentierung der Bilddaten 10 durchführt. Bei einer semantischen Segmentierung werden auf bekannte Art und Weise Pixel oder Pixelgruppen unterschiedlichen Klassen zugeordnet. Eine Trennung unterschiedlicher Instanzen der Klassen findet nicht statt. Hier und vorzugsweise wendet die Recheneinheit 9 in dem Klassifikationsschritt 16 das trainierte Maschinenlernmodell 15 auf die Bilddaten 10 an und ordnet Pixeln, insbesondere allen Pixeln, der Bilddaten 10 eine Klasse zu. Eine der Klassen ist dabei Kornbestandteilen 5 zugeordnet.

Vorzugsweise ordnet das Maschinenlernmodell 15 die Pixel höchstens dreißig unterschiedlichen Klassen, vorzugsweise höchstens acht unterschiedlichen Klassen, weiter vorzugsweise genau drei oder genau zwei unterschiedlichen Klassen zu. Dabei kann vorgesehen sein, dass eine Klasse Nicht-Kornbestandteilen 6 des Ernteguts 1 zugeordnet ist oder die Klassen "Kornbestandteile" und "Hintergrund" sind. Die letztgenannte Möglichkeit ist in Figur 3 gezeigt. Dort wird exemplarisch in einem Bild 14 eine semantische Segmentierung in die Klassen "Kornbestandteile" und "Hintergrund" durchgeführt. Nach der semantischen Segmentierung sind daher nur noch Informationen darüber vorhanden, welche Pixel Kornbestandteilen 5 zugeordnet sind.

Die Recheneinheit 9 kann aus den Pixeln, die Kornbestandteilen 5 zugeordnet sind, die den Kornbestandteilen 5 zugeordneten Bildregionen 17 ermitteln oder die den Kornbestandteilen 5 zugeordneten Pixel können die den Kornbestandteilen 5 zugeordneten Bildregionen 17 sein.

Die Anwendung der semantischen Segmentierung, insbesondere mit wenigen unterschiedlichen Klassen, ermöglicht die Nutzung eines effizienten und wenig komplexen Maschinenlernmodells 15. Dies ist insbesondere der Genauigkeit zuträglich und ermöglicht eine wenig rechenintensive Anwendung, beispielsweise auf dem Mobilgerät 7.

Im Anschluss an den Klassifikationsschritt 16 kann wie in Fig. 3 dargestellt ein Analyseschritt 20 vorgesehen sein. Hier und vorzugsweise führt die Recheneinheit 9 in der Analyseroutine 11 einen Analyseschritt 20 auf den den Kornbestandteilen 5 zugeordneten Bildregionen 17 durch. In dem Analyseschritt 20 ermittelt die Recheneinheit 9 je mindestens eine geometrische Eigenschaft, insbesondere einen Größenwert, der Bildregion 17. Aus den geometrischen Eigenschaften ermittelt die Recheneinheit 9 den Indikator I für die Aufbereitungsqualität.

Während der Ernte kann ein Benutzer 8 das vorschlagsgemäße Verfahren nutzen, um einen Überblick über die Effektivität der eingestellten Maschinenparameter des Feldhäckslers 2 zu erhalten und gegebenenfalls automatisch nachzusteuern. Im Vergleich zu bekannten Laborverfahren wie der Bestimmung des CSPS im Labor wird so eine Änderung der Maschinenparameter schon im laufenden Betrieb mit wenig Zeitaufwand ermöglicht.

Die geometrischen Eigenschaften umfassen hier und vorzugsweise geometrische Abmessungen der Kornbestandteile 5. Die geometrischen Abmessungen können eine kürzeste Seitenlänge und/oder eine größte Seitenlänge und/oder eine Querschnittsfläche umfassen. So werden hier und vorzugsweise Kornbestandteile 5 mit höchstens einer bestimmten maximalen kürzesten Seitenlänge als zerkleinert betrachtet und gehen in den Indikator I für die Aufbereitungsqualität ein.

Der Indikator I für die Aufbereitungsqualität kann einen Anteil an Kornbestandteilen 5 mit vorbestimmten geometrischen Eigenschaften an dem Erntegut 1 oder den Kornbestandteilen 5 abbilden.

Hier und vorzugsweise sind die Bildregionen 17 Rechtecke 19 oder ermittelt die Recheneinheit 9 aus den Bildregionen 17 Rechtecke 19. Vorzugsweise sind die Rechtecke 19 minimale umgebende Rechtecke. Unter einem minimalen umgebenden Rechteck wird hier das kleinste Rechteck in beliebiger zweidimensionaler Orientierung verstanden, das die erkannten Pixel des jeweiligen Kornbestandteils 5 vollständig einschließt. Hier und vorzugsweise ist die geometrische Eigenschaft, insbesondere der Größenwert, auf die Rechtecke 19 bezogen. Die geometrische Eigenschaft, insbesondere der Größenwert, kann jeweils eine Länge einer kleinsten Hauptachse der Rechtecke 19 sein.

Es wird üblicherweise so sein, dass die Kornbestandteile 5 bezogen auf die Bilddaten 10 relativ weit verteilt und selten sind. Nach der Ermittlung der zugehörigen Bildregionen 17 in dem Klassifikationsschritt 16 kann die weitere Analyse im Analyseschritt 20 daher relativ einfach sein. Es ist deshalb bevorzugt, dass der Analyseschritt 20 nicht auf einem Maschinenlernverfahren basiert. Die Recheneinheit 9 kann in dem Analyseschritt 20 eine Kantenerkennung zur Trennung der den Klassen "Kornbestandteile" und "Hintergrund" zugeordneten Pixel durchführen und vorzugsweise so die Rechtecke 19 ermitteln.

Den Indikator I der Aufbereitungsqualität kann die Recheneinheit 9 in dem Analyseschritt 20 als Summe der Fläche der Kornbestandteile 5 mit einem Größenwert, insbesondere der Länge der kleinsten Hauptachse der Rechtecke 19, unter einem Schwellwert als Anteil an der Gesamtfläche der Kornbestandteile 5 bestimmen. Der Schwellwert liegt hier und vorzugsweise zwischen 3 mm und 6 mm, vorzugsweise zwischen 4 mm und 5 mm und beträgt weiter vorzugsweise etwa 4,75 mm. Zusätzlich kann eine Offset-Korrektur und/oder eine Skalierung als Multiplikation mit einem Faktor vorgesehen sein. So wird der bekannte CSPS möglichst nachgebildet, wobei durch die Offset-Korrektur und/oder die Skalierung systematische Abweichungen berücksichtigt werden können. Diese können experimentell ermittelt werde.

Hier und vorzugsweise weist das trainierte Maschinenlernmodell 15 eine Anwendungsvorschrift und einen Trainingsdatensatz auf.

Allgemein wird unter einem trainierten Maschinenlernmodell 15 ein Maschinenlernmodell 15 verstanden, das bereits in einem Trainingsverfahren auf den Anwendungsfall trainiert wurde und im einfachsten Fall während der Anwendung nicht mehr dazu lernt. Das trainierte Maschinenlernmodell 15 weist einen Trainingsdatensatz, beispielsweise Gewichte der Neuronenverbindungen, und eine Anwendungsvorschrift auf. Die Anwendungsvorschrift beschreibt allgemein die zu verwendenden Rechenoperationen und der Trainingsdatensatz umfasst die in dem Trainingsverfahren ermittelten Parameter des Maschinenlernmodells 15 wie die Gewichte und ggfs. gelernte Hyperparameter.

Bezüglich des Trainingsdatensatzes und des Trainingsverfahrens wird auf die im Folgenden noch gemachten Ausführungen und insbesondere die Ausführungen zur weiteren Lehre des Trainingsverfahrens verwiesen.

Hier und vorzugsweise basiert die Anwendungsvorschrift auf einem convolutional neural network, insbesondere einem fully convolutional neural network. Der Trainingsdatensatz kann in einem Trainingsverfahren ermittelt worden sein oder werden.

Wie bereits erwähnt kann vorgesehen sein, dass der in Fig. 2 näher dargestellte Vorverarbeitungsschritt 24 von der Recheneinheit 9 in der Analyseroutine 11 durchgeführt wird, um aus den Bilddaten 10 die Eingangsdaten 18 zu ermitteln. Der Vorverarbeitungsschritt 24 kann ein Drehen eines Bildes 14 und/oder eine Korrektur einer Perspektive eines Bildes 14 und/oder ein Teilen eines Bildes 14 in mindestens zwei, vorzugsweise mindestens vier, Subbilder 21, und/oder eine Farbanpassung eines Bildes 14 und/oder eine Kontrastanpassung eines Bildes 14 umfassen. Im Anschluss an die Anwendung des trainierten Maschinenlernmodells 15 kann ein Zusammenfügen der Subbilder 21 vorgesehen sein.

Da vorliegend eine geometrische Eigenschaft einzelner Kornfragmente gesucht wird, sind im globaleren Kontext eines Bildes 14 wenige bis keine relevanten Informationen vorhanden. Durch das Teilen des Bildes 14 in mehrere Subbilder 21 kann daher ein kleineres neuronales Netzwerk verwendet werden, wodurch die Rechenkomplexität der Anwendung sinkt. Insbesondere die Korrektur der Perspektive ermöglicht es dem Benutzer 8, bei der Aufnahme des Bildes 14 nicht zu viel Acht darauf geben zu müssen, dieses aus einer vorgegebenen Perspektive aufzunehmen. Die Bestimmung der geometrischen Eigenschaften und die Anwendung eines spezifischen trainierten Maschinenlernmodells 15, insbesondere nur zur semantischen Segmentierung, sind durch eine Korrektur der Perspektive einfacher möglich.

Grundsätzlich kann die Recheneinheit 9 mehrere Recheneinheiten 9 aufweisen und mehrere Geräte umspannen. Hier und vorzugsweise weist die Recheneinheit 9 eine Mobilgerät-Recheneinheit 9a, eine Feldhäcksler-Recheneinheit 9b und eine Server-Recheneinheit 9c auf. Es kann vorgesehen sein, dass die Server-Recheneinheit 9c die Analyseroutine 11 zumindest teilweise durchführt, oder, dass die Mobilgerät-Recheneinheit 9b die Analyseroutine 11 vollständig durchführt. Bei der ersten Alternative kann durch die Nutzung einer Cloud beispielsweise eine höhere Rechenleistung zur Verfügung stehen während bei der zweiten Alternative die Analyseroutine 11 potenziell schneller abgeschlossen ist und ggfs. vollständig offline und auch bei schlechter Internetverbindung durchgeführt werden kann.

Hier und vorzugsweise ist vorgesehen, dass die Bilddaten 10 mehrere Bilder 14 umfassen. Diese mehreren Bilder 14 sind vorzugsweise Bilder 14 unterschiedlicher vorbereiteter Proben. Eine übliche Laborprobe umfasst häufig 500 g Erntegut 1. In einem Bild 14 lässt sich mit überschaubarem Aufwand nur eine deutlich kleinere Menge Erntegut 1 abbilden. Für eine statistische Sicherheit bei der Ermittlung des Indikators I für die Aufbereitungsqualität ist es daher vorteilhaft, wenn die Bilddaten 10 mindestens 100, vorzugsweise mindestens 150, weiter vorzugsweise mindestens 200 Kornpartikel aufweisen. Hier und vorzugsweise ist vorgesehen, dass das Mobilgerät 7 eine Warnung an den Benutzer 8 ausgibt, wenn zu wenige Kornpartikel in den Bilddaten 10 erkannt wurden. Die Grenze kann dabei vorzugsweise in einem Bereich unter 200 Kornpartikel, vorzugsweise unter 150, noch weiter vorzugsweise unter 100 Kornpartikeln liegen. Vorzugsweise liegt die Grenze, ab der eine Warnung an den Benutzer 8 ausgegeben wird, in einem Bereich über 50 Kornpartikeln. Als Reaktion auf die Warnung kann vorgesehen sein, dass der Benutzer 8 die Möglichkeit erhält, weitere Bilder 14 den Bilddaten 10 hinzuzufügen.

Generell kann vorgesehen sein, dass das Mobilgerät 7 eine Kamera 22 aufweist und der Benutzer 8 ein oder mehrere Bilder 14 der Bilddaten 10 mittels der Kamera 22 aufnimmt. Allgemein umfassen die Bilddaten 10 hier und vorzugsweise im sichtbaren Lichtbereich aufgenommene Bilder 14, wie sie von handelsüblichen Smartphones produziert werden. Insbesondere umfassen die Bilddaten 10 an Bildern 14 nur Bilder 14, die im sichtbaren Bereich aufgenommen wurden.

Vorzugsweise nimmt der Benutzer 8 mehrere Bilder 14 unterschiedlicher vorbereiteter Proben auf, die die Recheneinheit 9 in der Analyseroutine 11 zusammen als Bilddaten 10 analysiert. Vorzugsweise werden dabei die geometrischen Eigenschaften der Bildregionen 17, die den Kornbestandteilen 5 zugeordnet sind, aus mehreren Bildern 14 in einer statistischen Analyse zur Ermittlung des Indikators I für die Aufbereitungsqualität verwendet.

Die vorbereitete Probe 12 kann eine Probe auf einem definierten Hintergrund sein. Dieser definierte Hintergrund kann beispielsweise ein zu dem Feldhäcksler 2 gehöriges Brett 13 sein. Der definierte Hintergrund, insbesondere das Brett 13, kann eine Größenreferenz 23 und/oder eine definierte Farbe aufweisen. Vorzugsweise ist es dann so, dass die Recheneinheit 9 auf Basis der Größenreferenz 23 die geometrische Eigenschaft, insbesondere den Größenwert, ermittelt. Die Farbe kann eine Farbe sein, die in dem Erntegut 1 so nicht vorkommt, beispielsweise ein Blauton. Das Brett 13 kann beispielsweise Seitenlängen von 10 bis 50 cm aufweisen.

Ganz allgemein kann zusätzlich vorgesehen sein, dass der Indikator I für die Aufbereitungsqualität zusätzlich oder alternativ die Menge an Nicht-Kornbestandteilen 6 mit einer Überlänge betrifft. Eine Überlänge ist dabei eine Länge eines Partikels, die über einem vorgegebenen Schwellwert liegt. Der Schwellwert kann abhängig von den Maschinenparametern des Feldhäckslers 2 sein. Überlange Partikel können bei einer Silage zu Luftblasen und einer Pilz- oder Schimmelbildung führen.

Es kann vorgesehen sein, dass das Mobilgerät 7 dem Benutzer 8 den Indikator I für die Aufbereitungsqualität anzeigt.

Das vorschlagsgemäße Verfahren kann weiterhin ein Trainingsverfahren zur Erzeugung eines Trainingsdatensatzes eines Maschinenlernmodells mittels einer Recheneinheit umfassen oder einen Traingsdatensatz aus einem derartigen Trainingsverfahren verwenden. Die Recheneinheit erzeugt dabei in einem Trainingsschritt mittels einer Trainingsvorschrift basierend auf Trainingsdaten den Trainingsdatensatz. Die Trainingsdaten können annotierte Bilder von vorbereiteten Proben umfassen. Die Recheneinheit kann in der Trainingsvorschrift eine Kostenfunktion anwenden. Derartige Trainingsschritte sind grundsätzlich bekannt.

Diese Recheneinheit kann eine GPU sein und muss insbesondere nicht die Recheneinheit des Mobilgeräts 7 sein. Auch zeitlich kann das Trainingsverfahren von dem vorschlagsgemäßen Verfahren entkoppelt sein. Vorzugsweise wird ein Trainingsdatensatz bei vielen Anwendungen des vorschlagsgemäßen Verfahrens verwendet.

Die Nutzung einer Kostenfunktion in dem Training eines Maschinenlernmodells 15 ist soweit bekannt. Sie bestimmt wie die trainierbaren Parameter des Maschinenlernmodells 15 in dem Training angepasst werden. Die Auswahl einer guten Kostenfunktion trägt häufig maßgeblich zum Gelingen des Trainings bei.

Es kann vorgesehen sein, dass die Kostenfunktion eine dice-loss-Funktion ist. Zusätzlich oder alternativ kann die Kostenfunktion eine Abweichung des Indikators I für die Aufbereitungsqualität von einem Referenz-Indikator I für die Aufbereitungsqualität berücksichtigen.

Übliche Kostenfunktionen betrachten häufig die absolute Anzahl der Treffer des Maschinenlernmodells 15. Da vorliegend jedoch wenige den Kornbestandteilen 5 zugeordnete Pixel auf viele Hintergrund-Pixel kommen, würde auch ein Maschinenlernmodell 15, das alle Pixel als Hintergrund klassifiziert, relativ geringe Kosten bei einer üblichen Kostenfunktion erzeugen. Um dem entgegenzuwirken ist beispielsweise die dice-loss-Kostenfunktion vorteilhaft.

Es ist hier jedoch so, dass es bevorzugt nicht darauf ankommt, jeden Pixel eines Kornbestandteils 5 korrekt zuzuordnen, sondern das Maschinenlernmodell 15 darauf trainiert werden soll, insgesamt nah an den CSPS zu gelangen. Wenn dabei einige Randpixel eines Kornbestandteils 5 nicht berücksichtigt werden, kann dieser Effekt vernachlässigbar sein. Es kann daher vorgesehen sein, dass die Kostenfunktion darauf basiert, während des Trainings unter Zugrundelegung des aktuellen Trainingsstandes den Indikator I für die Aufbereitungsqualität zu berechnen und mit einem Referenz-Indikator für die Aufbereitungsqualität aus den Trainingsdaten zu vergleichen. So kann erreicht werden, dass das optimale Ergebnis des Trainings möglichst nah am CSPS liegt, statt auf eine gegebenenfalls unerreichbare Perfektion der semantischen Segmentierung zu optimieren.

Es kann somit vorgesehen sein, dass eine Abweichung des Indikators I für die Aufbereitungsqualität unter Zugrundelegung eines aktuellen Trainingsstandes von einem Referenz-Indikator für die Aufbereitungsqualität berechnet wird. Diese Abweichung kann in die Kostenfunktion einfließen. Dabei hat sich insbesondere die Nutzung eines Callbacks zur regelmäßigen Berücksichtigung der Abweichung in der Kostenfunktion als vorteilhaft herausgestellt.

Wie bereits erläutert wurde, kann vorliegend ein Maschinenlernmodell 15 mit einer nicht zu hohen Komplexität verwendet werden. Bevorzugt ist, dass das Maschinenlernmodell 15 mindestens 4 Millionen, vorzugsweise mindestens 5 Millionen, weiter vorzugsweise mindestens 6 Millionen, und/oder höchstens 15 Millionen, vorzugsweise höchstens 12 Millionen, weiter vorzugsweise höchstens 9 Millionen trainierbare Parameter aufweist. Als gut anwendbar hat sich beispielsweise ein Efficientnetb1 auf Tensorflow oder Tensorflow light Basis erwiesen. Als Architektur wird ein UNET bevorzugt.

Die Arbeitsaggregate 3 des Feldhäckslers 2 können zumindest teilweise mit Maschinenparametern einstellbar sein. Im Folgenden werden einige der bevorzugt vorhandenen Arbeitsaggregate 3 bei einem Feldhäcksler 2 näher beleuchtet.

Es kann vorgesehen sein, dass der Feldhäcksler als Arbeitsaggregat 3 einen mit Maschinenparametern einstellbaren Corncracker 25 aufweist.

Es kann vorgesehen sein, dass der Feldhäcksler 2 als Arbeitsaggregat 3 ein einen Erntegutstrom erzeugendes Vorsatzgerät zum Aufnehmen des Feldbestandes 4 aufweist. Dieses Aufnehmen kann ein Abernten umfassen. Der Feldhäcksler 2 kann als Arbeitsaggregat 3 zusätzlich oder alternativ in dem Erntegutstrom angeordnete Vorpresswalzen 27 mit einer, insbesondere als Maschinenparameter einstellbaren, Drehzahl aufweisen, über die eine Häcksellänge des Ernteguts 1 einstellbar ist.

Zusätzlich oder alternativ kann der Feldhäcksler 2 als Arbeitsaggregat 3 eine in dem Erntegutstrom 1 angeordnete Häckseltrommel 28 zum Häckseln des Ernteguts 1 aufweisen. Da die Häckseltrommel 28 häufig direkt mit einem Motor des Feldhäckslers 2 gekoppelt ist, kann es sein, dass die Häcksellänge im Wesentlichen, ohne Änderung der Motordrehzahl, nur über die Vorpresswalzen 27 einstellbar ist. Andere Anordnungen sind jedoch ebenso möglich. Entsprechend kann auch vorgesehen sein, dass die Häcksellänge nur sekundär über die Vorpresswalzen 27 einstellbar ist.

Der Corncracker 25 weist vorzugsweise zwei Walzen 29 auf, die im Betrieb jeweils mit einer als Maschinenparameter einstellbaren Drehzahl rotieren. Auch diese Drehzahl kann direkt an den Motor gekoppelt sein. Der Erntegutstrom verläuft vorzugsweise durch einen Spalt 30 mit einer als Maschinenparameter einstellbaren Spaltbreite zwischen den Walzen. Die Walzen 29 weisen vorzugsweise eine als Maschinenparameter einstellbare Differenzdrehzahl auf, um die sich die Drehzahl der Walzen 29 unterscheidet. Die Häckseltrommel 28 häckselt das Erntegut 1, der Corncracker 25 schließt die Kornbestandteile 5 auf und zerfasert die Nicht-Kornbestandteile 6. Es kann vorgesehen sein, dass der Corncracker wirkungslos schaltbar ist.

Hier und vorzugsweise wird der Indikator I für die Aufbereitungsqualität und/oder eine statistische Sicherheit des Indikators für die Aufbereitungsqualität I, insbesondere eine Menge an detektierten Kornpartikeln, einem Benutzer 8 angezeigt. Diese Anzeige kann auf einem Terminal des Feldhäckslers 2 erfolgen. Grundsätzlich kann dabei dem Benutzer 8 auch eine statistische Sicherheit des Indikators für die Aufbereitungsqualität I angezeigt werden, die aus den Bilddaten 10 ermittelt werden kann. Dafür kann einfacherweise eine Menge an detektierten Kornpartikeln genutzt werden. Ist diese Menge unter einem vorgegebenen Grenzwert, kann dem Benutzer 8 empfohlen werden, ein weiteres Bild 14 aufzunehmen.

Vorzugsweise kann der Benutzer 8 der Recheneinheit 9 einen Mindestwert und/oder Höchstwert und/oder einen zu erreichenden Wert für den Indikator I für die Aufbereitungsqualität vorgeben und somit die Berechnungsvorschrift anpassen.

Es kann vorgesehen sein, dass die Recheneinheit 9 basierend auf dem Indikator I für die Aufbereitungsqualität einen Maschinenparameter, insbesondere einen die Aufbereitungsqualität beeinflussenden Maschinenparameter, des Feldhäckslers 2, insbesondere des Corncrackers, hinsichtlich eines den Indikator I für die Aufbereitungsqualität betreffenden Optimierungsziels optimiert einstellt. Dieses Optimierungsziel kann beispielsweise der vom Benutzer 8 vorgegebene Mindest- oder Höchstwert oder zu erreichende Wert sein. Das Optimierungsziel kann auch einen geringeren Kraftstoffverbrauch oder dergleichen umfassen. Vorzugsweise ist der optimiert eingestellte Maschinenparameter die Drehzahl der Vorpresswalzen und/oder die Spaltbreite des Corncrackers und/oder die Differenzdrehzahl des Corncrackers und/oder die Drehzahl der Walzen des Corncrackers. Die Einstellung kann direkt erfolgen oder indirekt über die Einstellung eines anderen Maschinenparameters, beispielsweise der Drehzahl des Motors.

Hier und vorzugsweise ist das Optimierungsziel ein vorbestimmter Anteil zerkleinerter Kornbestandteile 5 mit vorbestimmten geometrischen Eigenschaften und/oder ein vorbestimmter, insbesondere minimaler, Kraftstoffverbrauch.

Es kann vorgesehen sein, dass die Recheneinheit 9 den Maschinenparameter automatisch zur Erreichung des Optimierungsziels regelt. Der Begriff "regeln" ist dabei im engeren Sinne zu verstehen und betrifft die Kombination aus Steuerung und Feedback zu einem Regelkreis.

Es kann vorgesehen sein, dass die Recheneinheit 9 in einer Optimierungsroutine unterschiedliche Einstellungen des Maschinenparameters sukzessive einstellt, um eine Abhängigkeit zwischen dem Maschinenparameter und dem Indikator I für die Aufbereitungsqualität zu ermitteln und dass die Recheneinheit 9 anschließend basierend auf der ermittelten Abhängigkeit den Maschinenparameter automatisch hinsichtlich des Optimierungsziels optimiert regelt. So kann beispielswese vorgesehen sein, dass die Spaltbreite des Corncrackers zu Beginn eines Erntevorgangs gezielt variiert wird, um die Spaltbreite zu ermitteln, bei der die Aufbereitungsqualität außerhalb der gesetzten Grenzen landet.

### Zusammenfassung

- 1: Erntegut
- 2: Feldhäcksler
- 3: Arbeitsaggregat
- 4: Feldbestand
- 5: Kornbestandteile
- 6: Nicht-Kornbestandteile
- 7: Mobilgerät
- 8: Benutzer
- 9: Recheneinheit
- 9a: Mobilgerät-Recheneinheit
- 9b: Feldhäcksler-Recheneinheit
- 9c: Server-Recheneinheit
- 10: Bilddaten
- 11: Analyseroutine
- 12: Probe
- 13: Brett
- 14: Bild
- 15: trainiertes Maschinenlernmodell
- 16: Klassifikationsschritt
- 17: Bildregionen
- 18: Eingangsdaten
- 19: Rechtecke
- 20: Analyseschritt
- 21: Subbilder
- 22: Kamera
- 23: Größenreferenz
- 24: Vorverarbeitungsschritt
- 25: Corncracker
- 26: Vorsatzgerät
- 27: Vorpresswalzen
- 28: Häckseltrommel
- 29: Walzen
- 30: Spalt
- I: Indikator

## Patentansprüche

1. Verfahren zur Bestimmung eines Indikators (I) für eine Aufbereitungsqualität eines landwirtschaftlichen Ernteguts (1) mittels eines Mobilgeräts (7), insbesondere eines Smartphones oder Tablets, und zur Steuerung eines Feldhäckslers (2) wobei das Mobilgerät (7) eine Mobilgerät-Recheneinheit (9a) aufweist die Teil einer Recheneinheit (9) ist, wobei der Feldhäcksler (2) eine Feldhäcksler-Recheneinheit (9b) aufweist, die Teil der Recheneinheit (9) ist und wobei die Mobilgerät-Recheneinheit (9a) mit der Feldhäcksler-Recheneinheit (9b) kommuniziert,
**dadurch gekennzeichnet,**
**dass** die Recheneinheit (9) Bilddaten (10) einer vorbereiteten, Kornbestandteile (5) und Nicht-Kornbestandteile (6) umfassenden, Probe des Ernteguts (1) in einer Analyseroutine (11) analysiert, um den Indikator (I) für die Aufbereitungsqualität des Ernteguts (1) zu bestimmen,
**dass** die Recheneinheit (9) in der Analyseroutine (11) ein trainiertes Maschinenlernmodell (15) anwendet, um zumindest einen Schritt der Bestimmung des Indikators (I) für die Aufbereitungsqualität des Ernteguts (1) durchzuführen und
**dass** die Recheneinheit (9) mindestens einen Maschinenparameter des Feldhäckslers (2) basierend auf dem Indikator (I) für die Aufbereitungsqualität einstellt.

2. Verfahren nach Anspruch 1 **dadurch gekennzeichnet, dass** die Kornbestandteile (5) Maiskornbestandteile sind, und/oder, dass der Indikator (I) für die Aufbereitungsqualität ein Indikator (I) für die Aufbereitungsqualität der Kornbestandteile (5) ist, vorzugsweise ein Indikator (I) für den Kornaufschluss, weiter vorzugsweise, dass der Indikator (I) für die Aufbereitungsqualität mit dem Corn-Silage-Processing-Score korreliert.

3. Verfahren nach Anspruch 1 oder 2 **dadurch gekennzeichnet, dass** die Recheneinheit (9) in der Analyseroutine (11) einen Klassifikationsschritt (16) auf den Bilddaten (10) durchführt, dass die Recheneinheit (9) in dem Klassifikationsschritt (16) Kornbestandteilen (5) zugeordnete Bildregionen (17) aus auf den Bilddaten (10) basierenden Eingangsdaten (18) ermittelt, vorzugsweise, dass die Recheneinheit (9) in dem Klassifikationsschritt (16) das trainierte Maschinenlernmodell (15) anwendet, um aus den Bilddaten (10) die den Kornbestandteilen (5) zugeordneten Bildregionen (17) zu ermitteln.

4. Verfahren nach Anspruch 3 **dadurch gekennzeichnet, dass** das trainierte Maschinenlernmodell (15) bei seiner Anwendung eine semantische Segmentierung der Bilddaten (10) durchführt, dass die Recheneinheit (9) in dem Klassifikationsschritt (16) das trainierte Maschinenlernmodell (15) auf die Bilddaten (10) anwendet und Pixeln, insbesondere allen Pixeln, der Bilddaten (10) eine Klasse zuordnet, dass eine Klasse Kornbestandteilen (5) zugeordnet ist, vorzugsweise, dass das Maschinenlernmodell (15) die Pixel höchstens 30 unterschiedlichen Klassen, vorzugsweise höchstens 8 unterschiedlichen Klassen, weiter vorzugsweise genau 3 oder genau 2 unterschiedlichen Klassen zuordnet, weiter vorzugsweise, dass eine Klasse Nicht-Kornbestandteilen (6) des Ernteguts (1) zugeordnet ist oder die Klassen "Kornbestandteile" und "Hintergrund" sind.

5. Verfahren nach Anspruch 3 oder 4 **dadurch gekennzeichnet, dass** die Recheneinheit (9) in der Analyseroutine (11) einen Analyseschritt (20) auf den den Kornbestandteilen (5) zugeordneten Bildregionen (17) durchführt, dass die Recheneinheit (9) in dem Analyseschritt (20) je mindestens eine geometrische Eigenschaft, insbesondere einen Größenwert, der Bildregionen (17) ermittelt und aus den geometrischen Eigenschaften den Indikator (I) für die Aufbereitungsqualität ermittelt, vorzugsweise, dass die Bildregionen (17) Rechtecke (19) sind oder die Recheneinheit (9) aus den Bildregionen (17) Rechtecke (19) ermittelt, weiter vorzugsweise dass die Rechtecke (19) minimale umgebende Rechtecke sind, dass die geometrische Eigenschaft, insbesondere der Größenwert, auf die Rechtecke (19) bezogen ist, insbesondere jeweils eine Länge einer kleinste Hauptachse der Rechtecke (19) ist.

6. Verfahren nach Anspruch 5 **dadurch gekennzeichnet, dass** der Analyseschritt (20) nicht auf einem Maschinenlernverfahren basiert, vorzugsweise, dass die Recheneinheit (9) in dem Analyseschritt (20) eine Kantenerkennung zur Trennung der den Klassen "Kornbestandteile" und "Hintergrund" zugeordneten Pixel durchführt und vorzugsweise so die Rechtecke (19) ermittelt.

7. Verfahren nach Anspruch 5 oder 6 **dadurch gekennzeichnet, dass** die Recheneinheit (9) den Indikator (I) der Aufbereitungsqualität in dem Analyseschritt (20) als Summe der Fläche der Kornbestandteile (5) mit einem Größenwert, insbesondere der Länge der kleinsten Hauptachse der Rechtecke (19), unter einem Schwellwert als Anteil an der Gesamtfläche der Kornbestandteile (5) bestimmt, vorzugsweise, dass der Schwellwert zwischen 3 mm und 6 mm, vorzugsweise zwischen 4 mm und 5 mm, weiter vorzugsweise etwa 4,75 mm, beträgt.

8. Verfahren nach einem der vorhergehenden Ansprüche **dadurch gekennzeichnet, dass** das trainierte Maschinenlernmodell (15) eine Anwendungsvorschrift und einen Trainingsdatensatz aufweist, dass die Anwendungsvorschrift auf einem convolutional neural network, insbesondere einem fully convolutional neural network, basiert, und/oder, dass der Trainingsdatensatz in einem Trainingsverfahren ermittelt wurde oder wird.

9. Verfahren nach einem der Ansprüche 3 bis 8 **dadurch gekennzeichnet, dass** die Recheneinheit (9) in der Analyseroutine (11) einen Vorverarbeitungsschritt durchführt, um aus den Bilddaten (10) die Eingangsdaten (18) zu ermitteln, dass der Vorverarbeitungsschritt ein Drehen eines Bildes (14) und/oder eine Korrektur einer Perspektive eines Bildes (14) und/oder ein Teilen eines Bildes (14) in mindestens 2, vorzugsweise mindestens 4, Subbilder (21), und/oder eine Farbanpassung eines Bildes (14) und/oder eine Kontrastanpassung eines Bildes (14) umfasst.

10. Verfahren nach einem der vorhergehenden Ansprüche **dadurch gekennzeichnet, dass** die Recheneinheit (9) eine Server-Recheneinheit (9c) aufweist und dass die Server-Recheneinheit (9c) die Analyseroutine (11) zumindest teilweise durchführt, oder, dass die Mobilgerät-Recheneinheit (9a) die Analyseroutine (11) vollständig durchführt.

11. Verfahren nach einem der vorhergehenden Ansprüche **dadurch gekennzeichnet, dass** die Bilddaten (10) mehrere Bilder (14) umfassen, vorzugsweise, dass das Mobilgerät (7) eine Kamera (22) aufweist, und der Benutzer (8) ein oder mehrere Bilder (14) der Bilddaten (10) mittels der Kamera (22) aufnimmt, weiter vorzugsweise, dass der Benutzer (8) mehrere Bilder (14) unterschiedlicher vorbereiteter Proben aufnimmt, die die Recheneinheit (9) in der Analyseroutine (11) zusammen als Bilddaten (10) analysiert.

12. Verfahren nach einem der vorhergehenden Ansprüche **dadurch gekennzeichnet, dass** die vorbereitete Probe (12) eine Probe auf einem definierten Hintergrund ist, vorzugsweise, dass der definierte Hintergrund eine Größenreferenz (23) und/oder eine definierte Farbe aufweist, weiter vorzugsweise, dass die Recheneinheit (9) auf Basis der Größenreferenz (23) die geometrische Eigenschaft, insbesondere den Größenwert, ermittelt.

13. Verfahren nach einem der vorhergehenden Ansprüche, **dadurch gekennzeichnet, dass** der Feldhäcksler (2) Arbeitsaggregate (3) aufweist, dass der Feldhäcksler als Arbeitsaggregat (3) einen mit Maschinenparametern einstellbaren Corncracker (25) aufweist, dass die Arbeitsaggregate (2) des Feldhäckslers (1) zumindest teilweise mit Maschinenparametern einstellbar sind, vorzugsweise, dass der Feldhäcksler (2) als Arbeitsaggregat (3) ein einen Erntegutstrom erzeugendes Vorsatzgerät (26) zum Aufnehmen eines Feldbestandes (4) aufweist, und/oder, dass der Feldhäcksler (2) als Arbeitsaggregat (3) in dem Erntegutstrom angeordnete Vorpresswalzen (27) mit einer, insbesondere als Maschinenparameter einstellbaren, Drehzahl aufweist, über die eine Häcksellänge des Ernteguts (1) einstellbar ist, und/oder, dass der Feldhäcksler (2) als Arbeitsaggregat (3) eine in dem Erntegutstrom angeordnete Häckseltrommel (28) zum Häckseln des Ernteguts (1) aufweist, und/oder, dass der Corncracker (25) zwei Walzen (29) aufweist, die im Betrieb jeweils mit einer als Maschinenparameter einstellbaren Drehzahl rotieren, dass der Erntegutstrom durch einen Spalt (30) mit einer als Maschinenparameter einstellbaren Spaltbreite zwischen den Walzen (29) verläuft und dass die Walzen (29) eine als Maschinenparameter einstellbare Differenzdrehzahl aufweisen, um die sich die Drehzahl der Walzen (29) unterscheidet.

14. Verfahren nach einem der vorhergehenden Ansprüche, **dadurch gekennzeichnet, dass** der Indikator für die Aufbereitungsqualität und/oder eine statistische Sicherheit des Indikators für die Aufbereitungsqualität (I), insbesondere eine Menge an detektierten Kornpartikeln, einem Benutzer (8) angezeigt wird, vorzugsweise, dass der Benutzer (8) der Recheneinheit (9) einen Mindestwert und/oder Höchstwert und/oder einen zu erreichenden Wert für den Indikator für die Aufbereitungsqualität vorgeben und somit die Berechnungsvorschrift anpassen kann.

15. Verfahren nach einem der vorhergehenden Ansprüche, **dadurch gekennzeichnet, dass** die Recheneinheit (9) basierend auf dem Indikator für die Aufbereitungsqualität einen Maschinenparameter, insbesondere einen den Kornaufschluss beeinflussenden Maschinenparameter, des Feldhäckslers (2), insbesondere der Vorpresswalzen (27), hinsichtlich eines den Indikator für die Aufbereitungsqualität betreffenden Optimierungsziels optimiert einstellt, vorzugsweise, dass der Maschinenparameter die Drehzahl der Vorpresswalzen (27) und/oder die Spaltbreite des Corncrackers (25) und/oder die Differenzdrehzahl des Corncrackers (25) und/oder die Drehzahl der Walzen (29) des Corncrackers (25) ist.

16. Verfahren nach Anspruch 15, **dadurch gekennzeichnet, dass** das Optimierungsziel ein vorbestimmter Anteil zerkleinerter Kornbestandteile (5) mit vorbestimmten geometrischen Eigenschaften und/oder ein vorbestimmter, insbesondere minimaler, Kraftstoffverbrauch ist.

17. Verfahren nach Anspruch 15 oder 16, **dadurch gekennzeichnet, dass** die Kontrollanordnung (9) den Maschinenparameter automatisch zur Erreichung des Optimierungsziels regelt, vorzugsweise, dass die Kontrollanordnung (9) in einer Optimierungsroutine unterschiedliche Einstellungen des Maschinenparameters sukzessive einstellt um eine Abhängigkeit zwischen dem Maschinenparameter und dem Indikator für die Aufbereitungsqualität zu ermitteln und dass die Kontrollanordnung (9) anschließend basierend auf der ermittelten Abhängigkeit den Maschinenparameter automatisch hinsichtlich des Optimierungsziels optimiert regelt.

## Claims

1. A method for determining an indicator (I) for a processing quality of a harvested agricultural material (1) by means of a mobile device (7), in particular a smartphone or tablet, and for controlling a forage harvester (2), wherein the mobile device (7) has a mobile device computing unit (9a) which is part of a computing unit (9), wherein the forage harvester (2) has a forage harvester computing unit (9b) which is part of the computing unit (9) and wherein the mobile device computing unit (9a) communicates with the forage harvester computing unit (9b),
**characterized in that**
in an analytical routine (11), the computing unit (9) analyses image data (10) of a prepared sample of the harvested material (1) comprising grain constituents (5) and non-grain constituents (6) in order to determine the indicator (I) for the processing quality of the harvested material (1),
**in that** in the analytical routine (11), the computing unit (9) uses a trained machine learning model (15) in order to execute at least one step for determining the indicator (I) for the processing quality of the harvested material (1), and
**in that** the computing unit (9) adjusts at least one machine parameter of the forage harvester (2) on the basis of the indicator (I) for the processing quality.

2. The method according to claim 1, **characterized in that** the grain constituents (5) are corn grain constituents, and/or **in that** the indicator (I) for the processing quality is an indicator (I) for the processing quality of the grain constituents (5), preferably an indicator (I) for corn cracking, more preferably **in that** the indicator (I) for the processing quality correlates with the corn silage processing score.

3. The method according to claim 1 or claim 2, **characterized in that** in the analytical routine (11), the computing unit (9) executes a classification step (16) on the image data (10), **in that** in the classification step (16), the computing unit (9) determines image regions (17) assigned to grain constituents (5) from input data (18) based on the image data (10), preferably **in that** in the classification step (16), the computing unit (9) uses the trained machine learning model in order to determine the image regions (17) assigned to the grain constituents (5) from the image data (10).

4. The method according to claim 3, **characterized in that** during its use, the trained machine learning model (15) executes a semantic segmentation of the image data (10), **in that** in the classification step (16), the computing unit (9) applies the trained machine learning model (15) to the image data (10) and assigns a class to pixels, in particular all pixels, of the image data (10) which is assigned to a class of grain constituents (5), preferably **in that** the machine learning model (15) assigns the pixels to at most 30 different classes, preferably at most 8 different classes, more preferably exactly 3 or exactly 2 different classes, more preferably **in that** a class is assigned to non-grain constituents (6) of the harvested material (1), or the classes are "grain constituents" and "background".

5. The method according to claim 3 or claim 4, **characterized in that** in the analytical routine (11), the computing unit (9) executes an analytical step (20) on the image regions (17) assigned to the grain constituents (5), **in that** in the analytical step (20), the computing unit (9) determines at least one geometric property, in particular a size value, for each image region (17) and determines the indicator (I) for the processing quality from the geometric properties, preferably **in that** the image regions (17) are rectangles (19) or the computing unit (9) determines rectangles (19) from the image regions (17), more preferably **in that** the rectangles (19) are minimum surrounding rectangles, **in that** the geometric property, in particular the size value, pertains to the rectangle (19), in particular a respective length of a smallest major axis of the rectangle (19).

6. The method according to claim 5, **characterized in that** the analytical step (20) is not based on a machine learning method, preferably **in that** in the analytical step (20), the computing unit (9) executes an edge detection in order to separate the pixels assigned to the "grain components" and "background" classes and preferably determine the rectangles (19) in this manner.

7. The method according to claim 5 or claim 6, **characterized in that** in the analytical step (20), the computing unit (9) determines the indicator (I) for the processing quality as the sum of the area of the grain constituents (5) with a size value, in particular the length of the smallest major axis of the rectangles (19), which is below a threshold as the fraction of the total area of the grain constituents (5), preferably **in that** the threshold is between 3 mm and 6 mm, preferably between 4 mm and 5 mm, more preferably approximately 4.75 mm.

8. The method according to one of the preceding claims, **characterized in that** the trained machine learning model (15) has an application rule and a training data set, **in that** the application rule is based on a convolutional neural network, in particular on a fully convolutional neural network, and/or **in that** the training data set has been determined or is determined in a training procedure.

9. The method according to one of claims 3 to 8, **characterized in that** in the analytical routine (11), the computing unit (9) executes a pre-processing step in order to determine the input data (18) from the image data (10), **in that** the pre-processing step comprises a rotation of an image (14) and/or a correction of a perspective of an image (14) and/or a division of an image (14) into at least 2, preferably at least 4 sub-images (21), and/or an adaptation of the colour of an image (14) and/or an adaptation of a contrast of an image (14).

10. The method according to one of the preceding claims, **characterized in that** the computing unit (9) has a server computing unit (9c) and **in that** the server computing unit (9c) executes the analytical routine (11) at least in part, or **in that** the mobile computing unit (9a) executes the analytical routine (11) in its entirety.

11. The method according to one of the preceding claims, **characterized in that** the image data (10) comprise a plurality of images (14), preferably **in that** the mobile device (7) has a camera (22), and the user (8) records one or more images (14) of the image data (10) by means of the camera (22), more preferably **in that** the user (8) records a plurality of images (14) of differently prepared samples which the computing unit (9) analyses together as image data (10) in the analytical routine (11).

12. The method according to one of the preceding claims, **characterized in that** the prepared sample (12) is a sample on a defined background, preferably **in that** the defined background has a size reference (23) and/or a defined colour, more preferably **in that** the computing unit (9) determines the geometric property, in particular the size value, on the basis of the size reference (23).

13. The method according to one of the preceding claims, **characterized in that** the forage harvester (2) has working assemblies (3), **in that** the forage harvester has a corn cracker (25) which can be adjusted with machine parameters as the working assembly (3), **in that** the working assemblies (2) of the forage harvester (1) can be adjusted at least in part with machine parameters, preferably **in that** the forage harvester (2) has a front attachment (26) for picking up a field crop (4) and which produces a flow of harvested material as the working assembly (3), and/or **in that** the forage harvester (2) has prepress rollers (27) disposed in the flow of harvested material as the working assembly (3), which have a rotational speed, which in particular is adjustable, as the machine parameter, via which a chopped material length of the harvested material (1) can be adjusted, and/or **in that** the forage harvester (2) has a chopping drum (28) disposed in the flow of harvested material for chopping the harvested material (1) as the working assembly (3), and/or **in that** the corn cracker (25) has two rollers (29) which, in operation, respectively rotate at a rotational speed which can be adjusted as the machine parameter, **in that** the flow of harvested material passes through a gap (30) with a gap width between the rollers (29) which can be adjusted as the machine parameter and **in that**, as the machine parameter, the rollers (29) have a differential rotational speed by which the rotational speed of the rollers (29) differs which can be adjusted.

14. The method according to one of the preceding claims, **characterized in that** the indicator for the processing quality and/or a statistical certainty of the indicator for the processing quality (I), in particular a quantity of detected grain particles, is indicated to the user (8), preferably **in that** the user (8) of the computing unit (9) specifies a minimum value and/or a maximum value and/or a value for the indicator for the processing quality to be reached and therefore can adjust the calculation rule.

15. The method according to one of the preceding claims, **characterized in that**, based on the indicator for the processing quality, the computing unit (9) optimally sets machine parameter, in particular a machine parameter influencing corn cracking of the forage harvester (2), in particular of the pre-processing rollers (27), with respect to an optimisation target relating to the indicator for the processing quality, preferably **in that** the machine parameter is the rotational speed of the prepress rollers (27) and/or the gap width of the corn cracker (25) and/or the differential rotational speed of the corn cracker (25) and/or the rotational speed of the rollers (29) of the corn cracker (25).

16. The method according to claim 15, **characterized in that** the optimisation target is a predetermined fraction of comminuted grain constituents (5) with predetermined geometric properties and/or a predetermined, in particular minimal, fuel consumption.

17. The method according to claim 15 or claim 16, **characterized in that** the control assembly (9) automatically regulates the machine parameters in order to achieve the optimisation target, preferably **in that** in an optimisation routine, the control assembly (9) adjusts different settings of the machine parameter in succession in order to determine a dependency between the machine parameter and the indicator for the processing quality and **in that** the control assembly (9) then automatically optimally regulates the machine parameters to the optimisation target on the basis of the determined dependency.

## Revendications

1. Procédé de détermination d'un indicateur (I) pour une qualité de traitement d'un produit de récolte (1) agricole à l'aide d'un appareil mobile (7), notamment d'un smartphone ou d'une tablette, et de commande d'une ramasseuse-hacheuse (2), l'appareil mobile (7) comprenant une unité de calcul d'appareil mobile (9a) qui fait partie d'une unité de calcul (9), la ramasseuse-hacheuse (2) comprenant une unité de calcul de ramasseuse-hacheuse (9b) qui fait partie de l'unité de calcul (9), et l'unité de calcul d'appareil mobile (9a) communiquant avec l'unité de calcul de ramasseuse-hacheuse (9b),
**caractérisé en ce que**
l'unité de calcul (9) analyse, dans une routine d'analyse (11), des données image (10) d'un échantillon préparé du produit de récolte (1), contenant des constituants grains (5) et des constituants non-grains (6), aux fins de déterminer l'indicateur (I) pour la qualité de traitement du produit de récolte (1),
**en ce que** l'unité de calcul (9) applique, dans la routine d'analyse (11), un modèle d'apprentissage machine (15) entraîné pour exécuter au moins une étape de la détermination de l'indicateur (I) pour la qualité de traitement du produit de récolte (1), et
**en ce que** l'unité de calcul (9) règle au moins un paramètre machine de la ramasseuse-hacheuse (2) sur la base de l'indicateur (I) pour la qualité de traitement.

2. Procédé selon la revendication 1, **caractérisé en ce que** les constituants grains (5) sont des constituants grains de maïs, et/ou **en ce que** l'indicateur (I) pour la qualité de traitement est un indicateur (I) pour la qualité de traitement des constituants grains (5), de préférence un indicateur (I) pour l'éclatement des grains, et en outre de préférence **en ce que** l'indicateur (I) pour la qualité de traitement est en corrélation avec le Corn-Silage-Processing-Score (niveau de traitement d'ensilage de maïs).

3. Procédé selon la revendication 1 ou 2, **caractérisé en ce que** l'unité de calcul (9) exécute, dans la routine d'analyse (11), une étape de classification (16) sur les données d'image (10), **en ce que** l'unité de calcul (9) détermine, à l'étape de classification (16), des régions d'image (17) associées aux constituants grains (5), à partir de données d'entrée (18) basées sur les données d'image (10), de préférence **en ce que** l'unité de calcul (9) applique, à l'étape de classification (16), le modèle d'apprentissage machine (15) entraîné pour déterminer à partir des données image (10), les régions d'image (17) associées aux constituants grains (5).

4. Procédé selon la revendication 3, **caractérisé en ce que**, lors de son application, le modèle d'apprentissage machine (15) entraîné réalise une segmentation sémantique des données image (10), **en ce que** l'unité de calcul (9) applique, à l'étape de classification (16), le modèle d'apprentissage machine (15) entraîné aux données image (10) et associe une classe à des pixels, notamment à tous les pixels des données image (10), **en ce qu'**une classe est associée à des constituants grains (5), de préférence **en ce que** le modèle d'apprentissage machine (15) associe les pixels au maximum à 30 classes différentes, de préférence au maximum à 8 classes différentes, voire de préférence exactement à 3 ou exactement à 2 classes différentes, et en outre de préférence **en ce qu'**une classe est associée à des constituants non grains (6) du produit de récolte (1), ou les classes sont « constituants non grains » et « arrière-plan ».

5. Procédé selon la revendication 3 ou 4, **caractérisé en ce que**, dans la routine d'analyse (11), l'unité de calcul (9) exécute une étape d'analyse (20) sur les régions d'image (17) associées aux constituants grains (5), **en ce que** l'unité de calcul (9) détermine, à l'étape d'analyse (20), chaque fois au moins une propriété géométrique, notamment une valeur de grandeur, des régions d'image (17), et détermine l'indicateur (I) pour la qualité de traitement à partir des propriétés géométriques, de préférence **en ce que** les régions d'image (17) sont des rectangles (19) ou l'unité de calcul (9) détermine des rectangles (19) à partir des régions d'image (17), en outre de préférence **en ce que** les rectangles (19) sont des rectangles à limite minimum, **en ce que** la propriété géométrique, notamment la valeur de grandeur, se rapporte aux rectangles (19), et est en particulier respectivement une longueur d'un axe principal le plus petit des rectangles (19).

6. Procédé selon la revendication 5, **caractérisé en ce que** l'étape d'analyse (20) n'est pas basée sur un procédé d'apprentissage machine, de préférence **en ce que** l'unité de calcul (9) exécute, à l'étape d'analyse (20), une identification de bord aux fins de séparer les pixels associés aux classes « constituants grains » et « arrière-plan », et détermine de préférence les rectangles (19) de cette manière.

7. Procédé selon la revendication 5 ou 6, **caractérisé en ce que** l'unité de calcul (9) détermine, à l'étape d'analyse (20), l'indicateur (I) de la qualité de traitement en tant que somme de la surface des constituants grains (5) avec une valeur de grandeur, notamment la longueur du plus petit axe principal des rectangles (19), en dessous d'une valeur seuil, en tant que proportion de la surface totale des constituants grains (5), de préférence **en ce que** la valeur seuil est comprise entre 3 mm et 6 mm, de préférence entre 4 mm et 5 mm, et est en outre de préférence d'environ 4,75 mm.

8. Procédé selon une des revendications précédentes, **caractérisé en ce que** le modèle d'apprentissage machine (15) entraîné présente une consigne d'application et un ensemble de données d'entraînement, **en ce que** la consigne d'application est basée sur un convolutional neural network (réseau de neurones convolutifs), notamment un fully convolutional neural network, et/ou **en ce que** l'ensemble de données d'entraînement a été déterminé ou est déterminé au cours d'un procédé d'entraînement.

9. Procédé selon une des revendications 3 à 8, **caractérisé en ce que** l'unité de calcul (9) exécute, dans la routine d'analyse (11), une consigne de prétraitement pour déterminer les données d'entrée (18) à partir des données image (10), **en ce que** l'étape de prétraitement comprend une rotation d'une image (14) et/ou une correction d'une perspective d'une image (14) et/ou une division d'une image (14) en au moins 2, de préférence au moins 4 sous-images (21), et/ou une adaptation de couleurs d'une image (14) et/ou une adaptation de contraste d'une image (14).

10. Procédé selon une des revendications précédentes, **caractérisé en ce que** l'unité de calcul (9) présente une unité de calcul de serveur (9c), et **en ce que** l'unité de calcul de serveur (9c) exécute au moins en partie la routine d'analyse (11), ou **en ce que** l'unité de calcul d'appareil mobile (9a) exécute en totalité la routine d'analyse (11).

11. Procédé selon une des revendications précédentes, **caractérisé en ce que** les données image (10) comprennent plusieurs images (14), de préférence **en ce que** l'appareil mobile (7) comprend une caméra (22), et l'utilisateur (8) enregistre une ou plusieurs images (14) des données image (10) à l'aide de la caméra (22), en outre de préférence **en ce que** l'utilisateur (8) enregistre plusieurs images (14) d'échantillons différents préparés, que l'unité de calcul (9) analyse ensemble dans la routine d'analyse (11), en tant que données image (10).

12. Procédé selon une des revendications précédentes, **caractérisé en ce que** l'échantillon (12) préparé est un échantillon sur un arrière-plan défini, de préférence **en ce que** l'arrière-plan défini présente une référence de grandeur (23) et/ou une couleur définie, en outre de préférence **en ce que** l'unité de calcul (9) détermine la propriété géométrique, notamment la valeur de grandeur, sur la base de la référence de grandeur (23).

13. Procédé selon une des revendications précédentes, **caractérisé en ce que** la ramasseuse-hacheuse (2) comprend des organes de travail (3), **en ce que** la ramasseuse-hacheuse comprend, en tant qu'organe de travail (3), un éclateur de grains (25) pouvant être réglé avec des paramètres machine, **en ce que** les organes de travail (2) de la ramasseuse-hacheuse (1) peuvent être réglés au moins en partie avec des paramètres machine, de préférence **en ce que** la ramasseuse-hacheuse (2) comprend, en tant qu'organe de travail (3), un outil frontal (26), destiné à ramasser une culture de champ (4) et générant un flux de produit de récolte, et/ou **en ce que** la ramasseuse-hacheuse (2) comprend, en tant qu'organe de travail (3), des rouleaux de précompression (27) disposés dans le flux de produit de récolte, avec une vitesse de rotation qui peut être réglée notamment en tant que paramètre machine et permet de régler une longueur de hachage du produit de récolte (1), et/ou **en ce que** la ramasseuse-hacheuse (2) comprend, en tant qu'organe de travail (3), un tambour hacheur (28) disposé dans le flux de produit de récolte et destiné à hacher le produit de récolte (1), et/ou **en ce que** l'éclateur de grains (25) présente deux rouleaux (29) qui, lors du fonctionnement, tournent chacun à une vitesse de rotation pouvant être réglée en tant que paramètre machine, **en ce que** le flux de produit de récolte passe dans un interstice (30) entre les rouleaux (29), avec une largeur d'interstice pouvant être réglé en tant que paramètre machine, et **en ce que** les rouleaux (29) présentent une différence de vitesse de rotation, pouvant être réglée en tant que paramètre machine, qui distingue la vitesse de rotation des rouleaux (29).

14. Procédé selon une des revendications précédentes, **caractérisé en ce que** l'indicateur pour la qualité de traitement et/ou une certitude statistique de l'indicateur pour la qualité de traitement (I), notamment une quantité de particules de grains détectées, sont indiqués à un utilisateur (8), de préférence **en ce que** l'utilisateur (8) peut prédéfinir pour l'unité de calcul (9) une valeur minimale et/ou une valeur maximale et/ou une valeur devant être atteinte par l'indicateur pour la qualité de traitement, et peut ainsi adapter la consigne de calcul.

15. Procédé selon une des revendications précédentes, **caractérisé en ce que**, sur la base de l'indicateur pour la qualité de traitement, l'unité de calcul (9) règle de manière optimisée un paramètre machine, notamment un paramètre machine influençant l'éclatement des grains, de la ramasseuse-hacheuse (2), notamment des rouleaux de précompression (27), par rapport à un objectif d'optimisation concernant l'indicateur pour la qualité de traitement, de préférence **en ce que** le paramètre machine est la vitesse de rotation des rouleaux de précompression (27) et/ou la largeur d'interstice de l'éclateur de grains (25) et/ou la différence de vitesse de rotation de l'éclateur de grains (25) et/ou la vitesse de rotation des rouleaux (29) de l'éclateur de grains (25).

16. Procédé selon la revendication 15, **caractérisé en ce que** l'objectif d'optimisation est une proportion prédéterminée de constituants grains (5) broyés, avec des propriétés géométriques prédéterminées, et/ou une consommation de carburant prédéterminée, notamment minimale.

17. Procédé selon la revendication 15 ou 16, **caractérisé en ce que** le dispositif de contrôle (9) règle automatiquement le paramètre machine pour atteindre l'objectif d'optimisation, de préférence **en ce que** le dispositif de contrôle (9) effectue, dans une routine d'optimisation, successivement des réglages différents du paramètre machine, afin de déterminer une dépendance entre le paramètre machine et l'indicateur pour la qualité de traitement, et **en ce que** le dispositif de contrôle (9) règle ensuite automatiquement de manière optimisée le paramètre machine par rapport à l'objectif d'optimisation, sur la base de la dépendance déterminée.
